# FASCICULE DE BREVET EUROPEEN

(11) **EP 2 547 633 B1**
(45) Date de publication et mention de la délivrance du brevet: **02.04.2014**
(21) Numéro de dépôt: 11713309.0
(22) Date de dépôt: 28.02.2011
(51) Int. Cl.: C04B 24/38, C04B 28/02

(54) **AGENT DE RETENTION D'EAU POUR COMPOSITIONS CIMENTAIRES ET COMPOSITIONS CIMENTAIRES LE CONTENANT**
WASSERRETENTIONSMITTEL FÜR ZEMENTÖSE ZUSAMMENSETZUNGEN UND ZEMENTÖSE ZUSAMMENSETZUNGEN DAMIT
WATER RETENTION AGENT FOR CEMENTITIOUS COMPOSITIONS AND CEMENTITIOUS COMPOSITIONS CONTAINING SAME

(30) Priorité: 15.03.2010 FR 1051814
(43) Date de publication de la demande: 23.01.2013
(73) Titulaire: Ciments Français, 92800 Puteaux (FR)
(72) Inventeur: FABBRIS, Faber, F-75012 Paris (FR)
(74) Mandataire: Le Cloirec, Claudine
(86) Numéro de dépôt international: PCT/FR2011/050405
(87) Numéro de publication internationale: WO 2011/114037

(56) Documents cités:
- EP-A1- 1 614 669
- WO-A1-02/094734
- US-A- 4 283 229
- US-A- 5 028 263

## Description

La présente invention concerne le domaine des agents de rétention d'eau pour compositions cimentaires, ainsi que les compositions cimentaires les contenant.

Les compositions cimentaires sont généralement constituées de ciment, d'eau et d'un ou plusieurs adjuvants selon les propriétés recherchées pour ces dernières. Les mortiers et bétons renferment en outre des composants inertes, tels que du sable ou des granulats de taille supérieure.

Comme leur nom l'indique, les adjuvants appelés agents de rétention d'eau ont pour but de maintenir l'eau au sein de cesdites compositions cimentaires.

En effet, lorsque cette composition elle-même, ou sous la forme de mortier ou de béton, est mise en contact avec un support absorbant poreux (tel que briques en terre cuite, sols argileux, ...) l'eau présente dans ladite composition cimentaire a tendance à migrer par capillarité vers ledit support réduisant ainsi la teneur en eau de ladite composition cimentaire. Une situation symétrique à savoir, un enrichissement excessif en eau, peut se produire quand la composition cimentaire est en contact avec une source d'eau (par exemple béton dans les gâchages en profondeur pour des pieux de fondation).

On entend donc par agent de rétention d'eau un agent qui maintient la teneur en eau de la composition cimentaire dans des limites adéquates, sans appauvrissement, ni enrichissement de la teneur en eau.

Dans tous ces cas, les propriétés de la composition cimentaire se trouvent altérées de façon non souhaitée (risques de fissuration ou de laitance pour les mortiers, altérations locales du ratio Eau/Ciment pour le béton etc.).

Les adjuvants à fonction de rétention d'eau fréquemment employés sont généralement des polysaccharides tels que des éthers de cellulose comme la méthylcellulose, la carboxyméthylcellulose, l'hydroxyéthylcellulose, ou encore l'éthyhydroxyéthylcellulose.

Ces adjuvants sont toujours introduits dans la pâte cimentaire sous forme de poudre avant ou lors du gâchage avec l'eau.

Sur chantier, il est difficile de doser avec précision de telles poudres. En outre, se pose le problème de leur homogénéisation dans les compositions cimentaires qu'elles soient ajoutées avant, pendant, ou après le gâchage avec l'eau.

Un but de l'invention est donc de proposer un adjuvant rétenteur d'eau sous une autre forme que sous la forme pulvérulente, à savoir sous une forme liquide.

Il a donc été recherché d'introduire de tels polysaccharides sous forme liquide.

Si les polysaccharides sont solubles à faible concentration dans l'eau, lorsque l'on souhaite augmenter leur concentration au-delà de 5 % en poids par exemple, leur solubilité n'est pas totale et l'on obtient très souvent des compositions à viscosité très importante, voire des compositions pâteuses ou des gels qu'il est ensuite très difficile d'utiliser : transvasement et pompage étant alors très difficiles ou impossibles.

Si, d'autre part, les polysaccharides sont dispersés dans un milieu liquide dans lequel ils ne sont pas solubles, ils engendrent des suspensions liquides en général instables, à cause de la différence de densité entre les particules et le milieu liquide. Ces suspensions peuvent présenter au cours du temps une décantation ou un phénomène de crémage conduisant à un dépôt sur les parois du récipient les contenant. Dans certains cas, ces suspensions présentent l'un des deux phénomènes suite à une variation de température. Dans d'autres, elles peuvent présenter l'un ou l'autre des deux phénomènes (décantation ou crémage) selon la température d'exposition.

Par ailleurs, le brevet US 5,028,263 de la Société AQUALON décrit des suspensions aqueuses de polymères anioniques ou non ioniques tels que des éthers cellulosiques dispersés dans des solutions aqueuses à forte teneur en sel d'ammonium. Or de tels sels ne sont pas compatibles avec une utilisation en milieu cimentaire car ils réagissent avec le Ca(OH)₂ et accélèrent la dégradation du béton.

Le brevet US 4,283,229 décrit des suspensions d'éther de cellulose renfermant de l'alumine très finement divisée. Or l'alumine très finement divisée accélère les temps de prise du ciment, ce qui peut pénaliser, par exemple, la réalisation des chapes autonivelantes, pour lesquelles un maintien rhéologique dans le temps est nécessaire. De plus, aucun de ces documents ne fait référence à une stabilité à la température des suspensions aqueuses mises en oeuvre.

La présente invention a pour but de palier aux inconvénients ci-dessus en proposant un agent de rétention d'eau sous la forme d'une suspension aqueuse liquide de polysaccharide qui puisse être utilisée dans des compositions cimentaires.

En effet, il a été découvert de manière surprenante que la mise en suspension de polysaccharide dans une solution aqueuse d'une certaine force ionique en présence d'une argile de type attapulgite et d'une poudre minérale micronisées permettait de stabiliser ladite suspension de polysaccharide au moins dans une certaine plage de température.

A cet effet, l'agent de rétention d'eau pour composition cimentaire selon l'invention est caractérisé en ce qu'il se présente sous la forme d'une suspension aqueuse liquide d'au moins un polysaccharide à une concentration massique comprise entre 15 et 30 % dans une solution aqueuse d'un sel de base forte, à l'exclusion de sels d'ammonium, de force ionique comprise entre 1,25 mol/L et 15 mol/L, présentant un pH supérieur à 9 et renfermant une attapulgite sous forme micronisée et au moins une poudre minérale non phylliteuse, ci-après dénommée filler, inerte chimiquement dans ladite suspension aqueuse, de granulométrie comprise entre 0,1 et 100 micromètres, conférant à ladite suspension aqueuse une stabilité au moins dans une gamme de température allant de 5°C à 30°C.

Ainsi, une forte concentration massique en polysaccharide permet une utilisation de cette suspension aqueuse dans de nombreuses situations et permet d'introduire une forte proportion en polysaccharide sans augmenter la teneur en adjuvant (qui ne doit pas dépasser 5 % de la masse du ciment). En outre, cette stabilité sur une plage de température allant d'au moins 5°C à 30°C autorise leur stockage, transport et mise en oeuvre dans des compositions cimentaires dans la plupart des utilisations, notamment sur chantiers.

La teneur massique en attapulgite de la suspension aqueuse est avantageusement comprise entre 0,1 % et 5 %, de préférence entre 0,2 % et 0,8 %.

Parmi les argiles testés, l'attapulgite (ou polygorskite) est un phyllosilicate qui permet de manière surprenante de stabiliser la suspension de polysaccharides selon l'invention vis-à-vis des variations de température (notamment entre 5 et 30 °C).

Les exemples comparatifs décrits plus loin dans la description montrent que d'autres argiles telles que la bentonite ou la kaolinite, aux mêmes concentrations, ne sont pas du tout efficaces.

De manière avantageuse, le filler est un filler siliceux, de préférence cristallin, de masse volumique comprise entre 2,60 et 2,80 g/mL. Il peut s'agir par exemple de silice micronisée.

De préférence, ce filler présente une courbe granulométrique dont la valeur D50 est comprise entre 1 et 12 micromètres, de préférence entre 2 et 8 micromètres.

Sa teneur massique est avantageusement comprise entre 0,1 et 5 %, de préférence entre 0,35 et 1,5 % de ladite suspension aqueuse.

La concentration massique préférée en polysaccharide(s) est comprise entre 18 et 25 % de ladite suspension aqueuse.

La suspension aqueuse est réalisée par la préparation tout d'abord de la solution aqueuse de force ionique comprise entre 1,25 mol/L et 15 mol/L, de préférence comprise entre 2,5 mol/L et 12,5 mol/L et avantageusement entre 5 et 10 mol/L.

Le sel de base forte utilisé pour préparer cette solution aqueuse peut être, par exemple, K₂CO₃, K₃PO₄, Na₂CO₃, ou NaH₂PO₄. On évite également dans cette solution, si l'on souhaite mettre en oeuvre ladite suspension dans le domaine cimentaire, la présence d'halogénures, ainsi que celle des sulfates.

Le polysaccharide se présente sous la forme d'une poudre sèche et sa courbe granulométrique à sec présente une valeur D50 comprise entre 10 et 200 µm, de préférence entre 50 et 150 µm.

De manière avantageuse, le polysaccharide est choisi parmi une hydroxy alkyl cellulose ou un hydroxy alkyl guar comportant un groupement alkyl en C₂ à C₈, ou un mélange de ceux-ci.

L'hydroxy alkyl cellulose peut être choisie parmi une hydroxy ethyl cellulose (HEC), une méthyl-hydroxy-propyl cellulose (MHPC), une hydroxyéthylcellulose modifiée hydrophobe (HM HEC), ou un mélange de celles-ci.

Dans le domaine cimentaire, il s'est avéré que l'agent de rétention d'eau sous la forme d'une suspension aqueuse, tel que décrit ci-dessus, pouvait être utilisé dans des compositions cimentaires pour augmenter à la fois leur viscosité et leur capacité à retenir l'eau en leur sein, voire sans affecter leur étalement. En effet, il a été constaté de manière surprenante que dans le cas, notamment, où le polysaccharide utilisé est une hydroxyalkylcellulose, il ne réduit pas l'étalement de ces compositions cimentaires dans lesquelles il est incorporé.

Ainsi la présente invention porte également sur une composition cimentaire à base de ciment et d'eau caractérisée en ce qu'elle renferme, en tant qu'agent rétenteur d'eau, une suspension aqueuse liquide telle que mentionnée ci-dessus en une teneur comprise entre 0,1 et 5 % environ en poids de ciment, de préférence entre 0,1 et 2 % en poids de ciment.

La présente invention va être illustrée à l'aide des exemples non limitatifs suivants :

### EXEMPLES :

### Exemple 1 - Comparatif

Une solution aqueuse de carbonate de potassium (K₂CO₃) est préparée selon une concentration massique de 32 g de K₂CO₃ dans 100 g d'eau. La force ionique de cette solution est voisine de 7 mol/L.

Si l'on introduit un polysaccharide tel que hydroxy éthyl cellulose dans cette solution, selon des fractions massiques comprises entre 18 et 22 % en poids, on constate que les particules ne se dissolvent pas et que cette suspension présente une séparation de phase sous la forme d'un crémage visible au bout de 12 h de stockage. Ce crémage correspond à environ 1/10^{ème} de la hauteur de la suspension.

La masse volumique de la solution est ici à 20°C de 1,2296 g/mL. Pour éviter cette tendance au phénomène de crémage, il peut être possible soit de réduire la masse volumique de la phase aqueuse (solution de K₂CO₃), soit augmenter la masse volumique de la suspension (particules de HEC).

La première solution est difficilement réalisable, il a donc été envisagé d'agir sur la densité des particules en suspension en les chargeant d'une substance solide qui peut, par exemple, rester solidaire des particules d'hydroxy éthyl cellulose hydratées en suspension.

Il s'avère que dans le cas présent, les particules sèches de HEC présentent un D50 de 85 micromètres. Des fillers siliceux ont été envisagés en vue de leur stabilité chimique vis-à-vis de la solution de K₂CO₃. Différents fillers de différentes granulométries ont été testés, ces fillers siliceux présentant une densité comprise entre 2,6 et 2,7. Ces fillers sont présentés dans le tableau 1 ci-dessous.

**Tableau 1 - Granulométrie des fillers sélectionnés**

| | **> 5 µm** | **D50** | **D10** | **D90** |
|---|---|---|---|---|
| **Filler siliceux A** | 77 % | 11 µm | 32 µm | 3 µm |
| **Filler siliceux B** | 57,4 % | 5,8 µm | 13,7 µm | 2,21 µm |
| **Filler siliceux C** | 33,8 % | 3,6 µm | 9,9 µm | 1,54 µm |
| **Filler siliceux D** | 13,7 % | 2,4 µm | 5,7 µm | 1,0 µm |

Les effets de ces différents fillers sur la suspension de référence sont présentés dans le tableau 2 ci-après.

Les fillers ont été ajoutés sous agitation à la solution de K₂CO₃ avant que l'ajout du polysaccharide hydroxy éthyl cellulose. Après repos de 12 heures, on observe (voir tableau 2) que les suspensions renfermant du filler B, C et D présentent un faible crémage, dont la fraction de la hauteur est inférieure à 1/20, plus faible que la suspension de référence, et celle avec le filler A.

Le filler B a donc été retenu pour la suite en considérant que des fillers à granulométrie plus fine et donc un niveau de broyage supérieur (c'est-à-dire à coût supérieur) ne présentent pas d'avantages significatifs.

Pour ces échantillons ainsi que pour les essais des exemples ci-après, a été mis en oeuvre l'appareillage dénommé Turbiscan®. Le Turbiscan® est un dispositif dont le fonctionnement est basé sur la diffusion de la lumière. Un faisceau laser investit un échantillon à l'intérieur d'un tube à essai. Selon la taille, la concentration et l'état de surface des particules, une fraction de la lumière est transmise dans la même direction d'incidence et une fraction est rétrodiffusée en différentes directions. Deux capteurs mesurent l'intensité du signal transmis (angle de déflection 0°) et du signal rétrodiffusé (angle de déflection égal à 135°). La source lumineuse se déplace sur toute la hauteur de l'échantillon mettant ainsi en évidence les éventuelles différences de composition et notamment une séparation de phases (brusques variations des signaux de lumière transmise ou rétrodiffusée en fonction de la hauteur). Les fractions d'intensité transmises et rétrodiffusées peuvent alors être représentées en fonction de la hauteur de l'échantillon. De ces graphiques sont déduites les hauteurs de chacune des phases permettant de quantifier la séparation de phases.

Dans les exemples ci-après, la stabilité à 12 h exprime la valeur arrondie, et la mesure Turbiscan® 12 heures la valeur plus précise en %, de la fraction de la hauteur de la phase séparée : une fraction positive représente un phénomène de crémage, une fraction négative représente un phénomène de décantation.

**Tableau 2 - Comparaison de l'effet de différents fillers sur la formule de référence**

| | **Sans filler** | **Filler A** | **Filler B** | **Filler C** | **Filler D** |
|---|---|---|---|---|---|
| **K₂CO₃** | 32 g | 32 g | 32 g | 32 g | 32 g |
| **Eau** | 100 g | 100 g | 100 g | 100 g | 100 g |
| **HEC** | 37,22 g | 37,22 g | 37,22 g | 37,22 g | 37,22 g |
| **Filler stabilisateur** | - | 1,7 g | 1,7 g | 1,7 g | 1,7 g |
| **Conc. Sol. Saline** | 32 g/100 mL | 32 g/100 mL | 32 g/100 mL | 32 g/100 mL | 32 g/100 mL |
| **Fract. Mass HEC** | 22 % | 22 % | 22 % | 22 % | 22 % |
| **ρₛₒₗ à 20°C** | 1,2296 g/mL | 1,2296 g/mL | 1,2296 g/mL | 1,2296 g/mL | 1,2296 g/mL |
| **Stabilité à 12 h** Fraction hauteur | Crémage < 1/10 | Crémage < 1/10 | Crémage < 1/20 | Crémage < 1/20 | Crémage < 1/20 |
| **Mesure Turbiscan 12 h** | 7,82 % | 6,96 % | 3,12% | 3,22 % | 3,05 % |

### Exemple 2 - comparatif

Afin de vérifier si la variation d'un dosage en filler permettait de lester suffisamment les particules hydratées d'hydroxy éthyl cellulose, différentes concentrations ont été testées. Elles étaient comprises entre 1 et 2 % en poids. Les résultats sont présentés dans le tableau 3 ci-après.

**Tableau 3 - Variation du dosage en filler B (1 % - 2 %)**

| | **Sans filler** | **1 %** | **1,2 %** | **1,4 %** | **1,6 %** | **1,8 %** | **2 %** |
|---|---|---|---|---|---|---|---|
| **K₂CO₃** | 32 g | 32 g | 32 g | 32 g | 32 g | 32 g | 32 g |
| **Eau** | 100 g | 100 g | 100 g | 100 g | 100 g | 100 g | 100 g |
| **HEC** | 37,22 g | 37,22 g | 37,22 g | 37,22 g | 37,22 g | 37,22 g | 37,22 g |
| **Filler stabilisateur** | - | 1,70 g | 2,059 g | 2,405 g | 2,75 g | 3,097 g | 3,46 g |
| **Conc. Sol. Saline** | 32 g/100 mL | 32 g/100 mL | 32 g/100 mL | 32 g/100 mL | 32 g/100 mL | 32 g/ 100 mL | 32 g/100 mL |
| **Fract. Mass HEC** | 22 % | 22 % | 22 % | 22 % | 22% | 22% | 22 % |
| **ρₛₒₗ à 20°C** | 1,2296 g/mL | 1,2296 g/mL | 1,2296 g/mL | 1,2296 g/mL | 1,2296 g/mL | 1,2296 g/moL | 1,2296 g/mL |
| **Mesure Turbiscan 12 h** | 7,82 % | 3,12 % | < 0,1 % | < 0,1 % | -1,7 % déc. | -2,69 % déc. | -3,5 % déc. |

| | | | | | | | |
|---|---|---|---|---|---|---|---|
| déc. = décantation | | | | | | | |

On remarque que les concentrations de 1,2 % et de 1,4 % présentent après 12 heures, un phénomène de crémage limité. Au-dessus, les concentrations supérieures ou égales à 1,6 % en filler favorisent une décantation.

La stabilité en température de la suspension à 1,2 % massique en filler a été testée entre 5 et 35°C (voir tableau 4). Le protocole utilisé pour contrôler cette stabilité en température est le suivant :
Une quantité d'environ 500 mL de suspension est préparée puis fractionnée en six échantillons qui sont exposés à des températures différentes (respectivement 5, 10, 15, 20, 25 et 35°C) pendant 12 heures. Ces échantillons sont ensuite soumis à une mesure de fraction de la lumière selon la méthode du Turbiscan® (décrit dans l'exemple 1 ci-dessus).

Après avoir ramené les échantillons à la température de 20°C, les mesures de stabilité sont répétées. Enfin, les échantillons sont soumis à une agitation et soumis à nouveau à une mesure à 20°C afin de détecter une éventuelle irréversibilité des transformations intervenues avec la température.

Après le retour à 20°C, les échantillons avec filler exposés préalablement à 5 et 10°C présentent un crémage important. Pour les échantillons à 25°C, on observe une séparation de phase intermédiaire. On constate donc que ces suspensions aqueuses d'hydroxy éthyl cellulose avec filler ne sont pas stables en fonction de la température, ce qui peut présenter des inconvénients, notamment lors de leur stockage.

**Tableau 4 - Stabilité en température de la formule de référence avec filler (1,2 %)**

| | **5°C** | **10°C** | **15°C** | **20°C** | **25°C** | **35°C** |
|---|---|---|---|---|---|---|
| Après 12 h | -1 % (déc.) | < 0,1 % | -5,5 % (déc.) | < 0,1 % | < 0,1 %* | < 0,1 % |
| Après retour à 20°C | 4,44 % | 2% | < 0,1 % | - | < 0,1 %* | < 0,1 % |

| | | | | | | |
|---|---|---|---|---|---|---|
| * séparation de phase intermédiaire | | | | | | |

### Exemple 3

Dans la formulation de référence renfermant 1,2 % massique de filler B a donc été introduit sous forme sèche 0,5 % massique d'attapulgite (commercialisée sous le nom Attagel 50 - particules de 0,1 µm et de densité 2,4). La composition de la suspension est présentée dans le tableau 5.

Les tests de stabilité à la température ont été effectués et il s'avère que ceux-ci sont tout à fait satisfaisants comme visible sur le tableau 6.

La stabilité de ces suspensions est nettement améliorée, grâce à la présence de ce filler et d'attapulgite.

**Tableau 5 - Formulation de référence avec filler (1,2 %) et attapulgite (0,5 %)**

| **Composant** | **Masse, g (%)** |
|---|---|
| K₂CO₃ | 32 g |
| Eau | 100 g |
| Hydroxyéthylcellulose | 37,23 g (22 %) |
| Filler B | 2,059 g (1,2 %) |
| Attapulgite | 0,865 g (0,5 %) |
| Stabilité à 12 h | < 0,1 % |

**Tableau 6 - Stabilité à la température de la formule de référence avec filler à 1,2 % et attapulgite à 0,5 %**

| | **5°C** | **10°C** | **15°C** | **20°C** | **25°C** | **35°C** |
|---|---|---|---|---|---|---|
| Repos 12 h | <0,1 % | <0,1 % | <0,1 % | <0,1 % | -0,5 % | -1,2 % |
| Après retour à 20°C | < 0,1 % | < 0,1 % | < 0,1 % | - | -0,2 % | -0,9 % |

### Exemple 4

Différentes concentrations en attapulgite ont été testées. Celles-ci sont présentées dans le tableau 7 ci-dessous.

**Tableau 7 - Formulation de référence avec filler (1,2 %) et attapulgite en quantités variables**

| **Composant** | **Masse (g)** | | | | |
|---|---|---|---|---|---|
| K₂CO₃ | 32 g | 32 g | 32 g | 32 g | 32 g |
| Eau | 100 g | 100 g | 100 g | 100 g | 100 g |
| Hydroxyéthylcellulose (22 %) | 37,23 g | 37,23 g | 37,23 g | 37,23 g | 37,23 g |
| Filler B (1,2 %) | 2,059 g | 2,059 g | 2,059 g | 2,059 g | 2,059 g |
| Attapulgite | - | 0,173 g | 0,346 g | 0,865 g | 1,384 g |
| % massique | 0 % | 0,1 % | 0,2% | 0,5 % | 0,8 % |

Les stabilités à la température de ces différentes suspensions ont été testées et elles sont présentées dans le tableau 8 ci-après.

### Tableau 8 - Stabilité à la température de la formule de référence avec filler à 1,2 % et attapulgite variable

**Sans attapulgite**

| | **5°C** | **10°C** | **15°C** | **20°C** | **25°C** | **35°C** |
|---|---|---|---|---|---|---|
| Repos 12 h | -1,00 % | < 0,1 % | -5,50 % | < 0,1 % | < 0,1 % | < 0,1 % |
| Après retour à 20°C | 4,44 % | 2,00 % | 0,10 % | - | 0,10 % | 0,10 % |

**Attapulgite à 0,1 %**

| | **5°C** | **10°C** | **15°C** | **20°C** | **25°C** | **35°C** |
|---|---|---|---|---|---|---|
| Repos 12 h | -1,00 % | <0,1% | -1,83 % | < 0,1 % | < 0,1 % | < 0,1 % |
| Après retour à 20°C | 2,82 % | 1,83 % | -2,65 % | - | < 0,1 % | 0,10 % |

**Attapulgite à 0,2 %**

| | **5°C** | **10°C** | **15°C** | **20°C** | **25°C** | **35°C** |
|---|---|---|---|---|---|---|
| Repos 12 h | -1,00 % | < 0,1 % | 0,2 % | < 0,1 % | < 0,1 % | < 0,1 % |
| Après retour à 20°C | -1,3 % | 0,2 % | 0,32 % | - | < 0,1 % | 0,10 % |

**Attapulgite à 0,5 %**

| | **5°C** | **10°C** | **15°C** | **20°C** | **25°C** | **35°C** |
|---|---|---|---|---|---|---|
| Repos 12 h | < 0,1 % | < 0,1 % | < 0,1 % | < 0,1 % | -0,5 % | -1,2 % |
| Après retour à 20°C | < 0,1 % | < 0,1 % | < 0,1 % | - | -0,2 % | -0,9 % |

**Attapulgite à 0,8 %**

| | **5°C** | **10°C** | **15°C** | **20°C** | **25°C** | **35°C** |
|---|---|---|---|---|---|---|
| Repos 12 h | 0,91 % | 0,25 % | <0,1 % | <0,1 % | -0,7 % | -1,3 % |
| Après retour 20°C | 0,65 % | < 0,1 % | < 0,1 % | - | -0,25 % | -0,7 % |

Les résultats de stabilité à la température sont nettement améliorés en présence d'attapulgite et plus particulièrement à partir d'une teneur massique de 0,2 % d'attapulgite dans la suspension aqueuse.

### Exemple 5 - Comparatif

Dans les mêmes conditions opératoires, si l'on maintient une concentration en attapulgite de 0,5 % et que l'on omet le filler les résultats de stabilité sont très médiocres. On constate à 24 heures un crémage important représentant 6 % de la hauteur de l'échantillon (voir tableau 9).

Ceci confirme que la combinaison de filler et d'attapulgite est essentielle, la présence combinée d'attapulgite et de filler confère une synergie dans la stabilité à la température de la suspension aqueuse de polysaccharide.

**Tableau 9 - Formulation de référence avec attapulgite et sans filler**

| **Composant** | **Masse, g (%)** |
|---|---|
| K₂CO₃ | 32 g |
| Eau | 100 g |
| Hydroxyéthylcellulose | 37,23 g (22 %) |
| Filler B | - |
| Attapulgite | 0,865 g (0,5 %) |
| Stabilité à 24 h | 6 % |

### Exemple 6 - Essais avec différents polysaccharides

Différents polysaccharides ont été testés tous à des concentrations massiques de 22 % de la suspension aqueuse. Il s'agit de :
- L'hydroxy éthyl cellulose (HEC) : dérivé cellulosique (éther cellulosique) préparé à partir d'un polysaccharide naturel modifié dont la chaîne principale est la cellulose (β-D-Glucose) éthérifié au moyen d'une base forte et d'oxyde éthylène pour obtenir l'hydroxy éthyl cellulose avec un nombre de mol de substituant (MS) par unité de β-D-Glucose de 2,5 (commercialisé sous le nom NATROSOL GXR, présentant un degré de polymérisation voisin de 1.000).
- L'hydroxy éthyl cellulose à haut degré de polymérisation HEC (HDP) (commercialisé sous le nom NATROSOL 250 HHXR) : il s'agit de la même molécule que l'hydroxy éthyl cellulose décrite ci-dessus avec un degré de polymérisation supérieur compris entre 30.000 et 100.000 environ.
- La méthyl hydroxy propyl cellulose (MHPC) : ce dérivé cellulosique présente deux types de substituants au niveau des groupements OH de la cellulose, à savoir des groupements méthoxyles (-O-CH₃) et d'hydroxy propyl (-O-CH₂-CH(OH)-CH₃). Le degré de substitution des méthoxyles est compris entre 1,17 et 2,33 et, le degré de substitution des hydroxy proyl est compris entre 0,05 et 0,8. Le degré de polymérisation du motif cellulosique est compris entre 220 et 300, ce qui confère à la molécule une masse molaire moyenne comprise entre 40.000 et 50.000. Ce polysaccharide est commercialisé sous le nom CULMINAL MHPC 500-PF.

- L'hydroxy éthyl cellulose modifié hydrophobe (HMHEC) : ce dérivé cellulosique présente deux types de substituants au niveau des groupements OH de la molécule de glucose, à savoir des hydroxy éthyles (-O-CH₂-CH₂-OH) et des groupements alkyl avec un nombre de carbones compris entre 8 et 25, et est commercialisé sous le nom NEXTON D2500W. Le nombre de moles de substituants par unité β-D-glucosidique est voisin de 2,5.
- L'hydroxy propylguar (HPG) : ce polysaccharide présente une chaîne principale constituée par une succession de résidus mannoses (β-1→4)-D-mannopyranose) avec un groupement latéral (1→6) constitué par un résidu galactose (avec un ratio mannose/galactose compris entre 1,5 et 2) ; à la place de certains groupements -OH de la molécule naturelle sont présents des groupements hydroxy propyles (introduits par éthérification). La molécule est commercialisée par la Société LAMBERTI sous le nom ESACOL HS30.

Ces polysaccharides ont tous été testés dans des conditions identiques, à savoir à 22 % massique dans la suspension aqueuse en présence de filler à 0,4 % ou 1,2 % et d'attapulgite à 0,5 % (voir tableau 10). L'ensemble des suspensions renfermant ces polysaccharides a présenté des performances intéressantes vis-à-vis de la stabilité à la température (voir les résultats regroupés dans le tableau 11).

**Tableau 10**

| **Composant** | **Masse (g) (%)** | | | | |
|---|---|---|---|---|---|
| K₂CO₃ | 32 | 32 | 32 | 32 | 32 |
| Eau | 100 | 100 | 100 | 100 | 100 |
| Polysaccharide | HEC | HEC (HDP) | MHPC | HMHEC | HPG |
| | 37,23 | 37,23 | 37,23 | 37,23 | 37,23 |
| | (22 %) | (22 %) | (22 %) | (22 %) | (22 %) |
| Filler B | 0,686 | 2,059 | 0,686 | 0,686 | 0,686 |
| | (0,4 %) | (1,2 %) | (0,4 %) | (0,4 %) | (0,4 %) |
| Attapulgite | 0,865 | 0,865 | 0,865 | 0,865 | 0,865 |
| | (0,5 %) | (0,5 %) | (0,5 %) | (0,5 %) | (0,5 %) |
| Stabilité à 12h | < 0,1 % | < 0,05 % | < 0,1 % | < 0,1 % | 2,08 % |

### Légende :

HEC = hydroxy éthyl cellulose (NATROSOL 250 GXR)
HEC (HDP) = hydroxy éthyl cellulose à haut degré de polymérisation (NATROSOL 250 HHXR)
MHPC = méthyl-hydroxy-propylcellulose (CULMINAL MHPC 500-PF)
HMHEC = hydroxyethylcellulose modifiée hydrophobe (NEXTON D2500W)
HPG = Hydroxy propylguar (ESACOL HS30)

**Tableau 11 - Stabilité à la température des suspensions des différents polysaccharides du tableau 10**

| | | **5°C** | **10°C** | **15°C** | **20°C** | **25°C** | **35°C** |
|---|---|---|---|---|---|---|---|
| **HEC (HDP)** | Repos 12h | <0,1 % | <0,1 % | <0,1 % | <0,1 % | <0,1 % | -0,13 % |
| | Après retour à 20°C | <0,1 % | <0,1 % | <0,1 % | - | <0,1 % | -0,2 % |
| **MHPC** | Repos 12h | <0,1 % | <0,1 % | <0,1 % | <0,1 % | <0,1 % | <0,1 % |
| | Après retour à 20°C | <0,1 % | <0,1 % | <0,1 % | - | <0,1 % | <0,1 % |
| **HMHEC** | Repos 12h | <0,1 % | <0,1 % | <0,1% | <0,1 % | < 0,1 % | <0,1 % |
| | Après retour à 20°C | <0,1 % | <0,1 % | <0,1 % | - | < 0,1 % | < 0,1 % |
| **HPG** | Repos 12h | <0,1 % | <0,1 % | <0,1 % | <0,1 % | 3,59 % | - |
| | Après retour à 20°C | 4,35 % | 3,38 % | 1,96 % | - | 2,40 % | - |

A titre de comparaison, ont été testés d'autres polysaccharides comportant sur les chaînes glucosidiques des groupements acyle, tels que par exemple la gomme Gellan (non déacylée) ou la carboxyméthylcellulose (CMC). Les mélanges de ces polysaccharides avec la solution aqueuse de K₂CO₃ sont impossibles, les flocs se développant très rapidement et conduisant à un mélange pâteux pratiquement solide.

Des observations similaires ont été faites avec la gomme Xanthane qui possède également des groupements acyle.

### Exemple 7 - Comparatif

La bentonite a été testée en remplacement de l'attapulgite.

Si l'on compare avec le résultat obtenu à l'exemple 3 dans les mêmes conditions, la bentonite ne permet pas une stabilité à 24 heures : on constate un important phénomène de crémage et tous les échantillons présentent un déphasage à valeur négative c'est-à-dire une décantation lors des essais de stabilité à la température (voir tableau 13).

**Tableau 12 - Formulation de référence avec filler (1,2 %) et bentonite (0,5 %)**

| **Composant** | **Masse, g (% massique)** |
|---|---|
| K₂CO₃ | 32 g |
| Eau | 100 g |
| Hydroxyéthylcellulose | 37,23 g (22 %) |
| Filler B | 2,059 g (1,2%) |
| Bentonite | 0,865 g (0,5 %) |
| Stabilité à 24 h | 9% |

**Tableau 13 - Stabilité à la température de la formule de référence avec filler à 1,2 % et bentonite à 0,5 %**

| | **5°C** | **10°C** | **15°C** | **20°C** | **25°C** | **35°C** |
|---|---|---|---|---|---|---|
| Repos 12 h | < 0,1 % | -3,87 % | -7,84 % | -9 % | - | -14,1 % |
| Après retour à 20°C | -2,3% | -9,6 % | -13,3 % | - | - | -14,2 % |

### Exemple 8 - Comparatif

Les essais avec une autre argile, la kaolinite, montrent des comportements identiques à ceux observés avec la bentonite avec une aggravation. Les suspensions sont très instables, on note une décantation à 24 heures ainsi que lors des différents essais à différentes températures (voir tableau 15).

**Tableau 14 - Formulation de référence avec filler (1,2 %) et kaolinite (0,5 %)**

| **Composant** | **Masse, g (% massique)** |
|---|---|
| K₂CO₃ | 32 g |
| Eau | 100 g |
| Hydroxyéthylcellulose | 37,23 g (22 %) |
| Filler B | 2,059 g (1,2 %) |
| Kaolinite | 0,865 g (0,5 %) |
| Stabilité à 24 h | -19,08 % |

**Tableau 15 - Stabilité à température de la formule de référence avec filler à 1,2 % et kaolinite à 0,5 %**

| | **5°C** | **10°C** | **15°C** | **20°C** | **25°C** | **35°C** |
|---|---|---|---|---|---|---|
| Repos 12 h | -18,3 % | -20,06 % | -13,5 % | -19,08 % | - | -32,1 % |
| Après retour à 20°C | -15,0 % | -26,2 % | -19,5 % | - | - | 28,1 % |

### Exemple 9 (comparatif) : Absence de sel

A titre de comparaison, ont été testées des suspensions aqueuses de polysaccharides en l'absence de sel K₂CO₃ avec les mêmes polysaccharides et dans les mêmes conditions que pour l'exemple 6. Il s'est avéré impossible, pour tous les polysaccharides, de réaliser une suspension aqueuse, en raison de la formation, dans tous les cas, de flocs importants.

### Exemple 10 - Agent de rétention d'eau pour composition cimentaire

### A- Méthode de mesure de la rétention d'eau

Pour mesurer la capacité d'un mortier à retenir l'eau lorsqu'il est en contact avec un milieu absorbant une méthode de mesure spécifique a été mise au point.

Le pouvoir rétenteur d'eau du mortier est évalué à l'aide d'une filtration par dépression. Le protocole est le suivant :
a. préparation du mortier : la fraction massique initiale en eau de chaque composition de mortier est exprimée par fₑₐᵤ = (masse d'eau de gâchage)/(masse totale du mortier)
b. une masse définie de mortier mₘₒᵣₜᵢₑᵣ est disposée sur un filtre papier d'un entonnoir à vide de type Büchner, le mortier à l'intérieur de l'entonnoir renferme ainsi une masse d'eau égale à W = mₘₒᵣₜᵢₑᵣ, fₑₐᵤ.
c. l'entonnoir Büchner est placé sur une fiole à vide reliée à une pompe à membrane en imposant un vide de 200 mbar pendant 3 minutes permettant l'extraction d'une partie de l'eau contenue dans le mortier.
d.la pesée de la fiole à vide après l'extraction permet ensuite de déterminer la masse d'eau extraite par filtration w.

La rétention d'eau, R d'un mortier, est alors définie comme R = (W - w/W)100 avec :
R : rétention d'eau, en pourcentage ;
W : masse d'eau dans le mortier avant filtration (W = m_{mortier·}fₑₐᵤ), en grammes ;
w : masse liquide récupérée après la filtration, en grammes.
La précision de la mesure est estimée à 5 % (incertitude relative).

### B- Mesure de l'étalement

Outre la rétention d'eau, il est habituel d'évaluer également l'étalement (E, millimètres) du mortier. Cette mesure classique (mesuré selon le protocole MBE* mis au point par le CTG) consiste à remplir un moule de forme tronconique avec le mortier que l'on souhaite caractériser. Le moule est ensuite soulevé et le diamètre de son empreinte est pris comme valeur d'étalement du mortier.

### C- Adjuvant dans composition cimentaire sous forme de mortier

L'objectif à atteindre était ici d'améliorer la capacité de rétention d'eau sans affecter l'étalement du mortier.

L'adjuvant selon l'invention qui a été testé est sous la forme d'une suspension aqueuse stable de polysaccharide présentée à l'exemple 3 et dénommée ci-après RETEXP, et a été comparé à un agent de rétention d'eau du commerce (BASF, STARSOLITE).

Les essais ont été réalisés sur une pâte de ciment composée de :
- 680 g de ciment,
- 1350 g de sable MBE*
- 303 g d'eau,
- 8,16 g de superplastifiant (CIMFLUID ADAGIO 4019), soit 1,2 % de la masse de ciment

(* La méthode du mortier de béton équivalent (MBE). Un nouvel outil d'aide à la formulation des bétons adjuvantés. A. Schwatzentruber, C. Catherine, Materials and structures, Vol. 33, October 2000, pp 475-482)

Outre les deux adjuvants mentionnés ci-dessus, ont été testés certains composants de la suspension aqueuse RETEXP, à savoir l'hydroxy éthyl cellulose HEC, le sel K₂CO₃ et l'attapulgite dans des quantités égales à celles de leur présence dans l'adjuvant RETEXP. Les résultats sont regroupés dans le tableau 16.

**Tableau 16 - Mesure de l'étalement et de la rétention d'eau**

| **Adjuvant** | **% massique par rapport au ciment** | **Etalement (mm)** | **Rétention d'eau (%)** |
|---|---|---|---|
| Aucun | - | 345 | 64 |
| BASF STARSOLITE (poudre) | 0,35 | 340 | 85 |
| RETEXP (liquide) (ex. 3) | 0,35 | 363 | 84 |
| HEC (poudre) | 0,075 | 362 | 83 |
| K₂CO₃ (poudre) | 0,065 | 340 | 65 |
| Attapulgite (poudre) | 0,0018 | 345 | 64 |

On constate que l'ajout de l'adjuvant de rétention d'eau selon l'invention RETEXP permet d'obtenir des rétentions d'eau du même ordre de grandeur que celles du produit commercial BASF mais avec l'avantage d'un étalement supérieur à ce dernier ainsi qu'à celui de la référence sans adjuvant,

L'adjuvant (RETEXP), selon la présente invention, présente l'énorme avantage d'être introduit sous forme liquide, donc permettant un dosage et une dispersion aisés dans la composition cimentaire.

En outre, si l'on regarde les valeurs d'étalement, le K₂CO₃ seul et l'attapulgite seul n'ont pas d'influence sur l'étalement. Ils ne sont donc pas à l'origine des propriétés constatées, c'est donc bien la présence du polysaccharide qui permet la surprenante augmentation de l'étalement, malgré une rétention d'eau accrue.

### Exemple 11 - Etalement et viscosité de béton autoplaçant

Il a été également constaté que la suspension aqueuse selon l'invention RETEXP permet de conférer à une composition cimentaire de type béton autoplaçant, des propriétés adéquates à la fois d'étalement mais également de viscosité et d'aptitude au passage (passing ability), ainsi que des résistances à la ségrégation.

A cet effet, une composition de béton telle que présentée dans le tableau 17 a été mise en oeuvre avec différents adjuvants :
- soit sans autre adjuvant que le superplastifiant : béton de référence avec filler,
- soit en présence à la fois d'un agent viscosant et d'un agent seuillant c'est-à-dire un béton sans filler (colonne 2), conforme à la demande de brevet FR 07/05568 du même demandeur,
- soit avec un béton sans filler avec un volume de pâte réduit avec seulement un seul agent viscosant,
- soit un béton sans filler avec seulement l'adjuvant liquide RETEXP (colonne de droite) selon la présente invention, également avec un volume de pâte cimentaire réduit.

Les paramètres suivants ont été mesurés :
- l'étalement selon la norme NF EN 12350-2 à différents intervalles de temps à compter du gâchage to jusqu'à t₁₂₀ min.
- le test au V funnel à t₀ et t_{60 min} qui permet à la fois de tester la viscosité et l'aptitude au remplissage d'un béton autoplaçant. Un entonnoir en forme de V est rempli avec du béton frais et on mesure le temps (en secondes) nécessaire au béton pour s'écouler de cet entonnoir. La valeur obtenue mesure le temps d'écoulement du V funnel. Ce test est décrit en détail dans le document The European Guidlines for Sels Compacting Concrete (Mai 2005 Self Compactif Concrete European Projet Group - S.C.C.E.P.G.) ;

- le test de la L-box (décrit dans le même document) qui consiste à laisser écouler un volume mesuré de béton frais horizontalement à travers des espaces ménagés entre des barreaux verticaux. Le béton est introduit dans la partie verticale du caisson en forme de L et s'écoule dans la partie horizontale et l'on mesure la hauteur écoulée dans cette partie à l'extrémité de la branche horizontale du L du caisson. La mesure présentée dans le tableau 17 exprime la "passing ability", et est égale au rapport de la hauteur du béton à l'extrémité de la partie horizontale du caisson sur la hauteur du béton restant dans la portion verticale du caisson ;
- la stabilité au tamis (méthode de mesure présentée dans le même document), le résultat indique le pourcentage de béton passant à travers un tamis pendant un temps donné ;
- la résistance à la compression est mesurée à 7 jours et à 28 jours.

Les résultats présentés dans le tableau 17 montrent que la formulation de béton autoplaçant avec l'adjuvant RETEXP présente, avec un volume de pâte réduit, un meilleur étalement de t=30 min jusqu'à t = 120 min, une meilleure stabilité au tamis, par rapport à la formulation avec 110 kg/m³ de filler qui présente une "sur-résistance" à la compression à 28 jours.

**Tableau 17**

| Constituants (Kg/m³) (% poids/ciment) | Béton de référence avec filler | Béton sans filler Vₚ = 370 L | Béton sans filler à Vₚ = 350 L | Béton sans filler à Vₚ = 350 L adjuvant liquide |
|---|---|---|---|---|
| Ciment | 320 | 372 | 350 | 350 |
| Eau efficace | 200 | 227 | 213 | 213 |
| Filler | 110 | 0 | 0 | 0 |
| Sable (0/4 mm) | 876 | 876 | 904 | 904 |
| Gravillons (4/14 mm) | 709 | 709 | 732 | 732 |
| Superplastifiant | 3,13 (0,95 %) | 2,70 (0,73 %) | 3,01 (0,86 %) | 3,01 (0,86%) |
| Agent "viscosant"* | 0 | 0,84 (0,225 %) | 0,63 (0,18 %) | 3,15 (liq.) 0,9 % |
| Agent "seuillant"** | 0 | 0,093 (0,025 %) | | |
| Volume de pâte | 370 L | 370 L | 350 L | 350 L |
| Etalement | | | | |
| à to | 665 mm | 665 mm | 610 mm | 600 mm |
| à t_{30 min} | 650 mm | 650 mm | 670 mm | 680 mm |
| a t₄₅ₘᵢₙ | 605 mm | - | - | - |
| à t_{60 min} | 595 mm | 690 mm | 680 mm | 660 mm |
| à t_{90 min} | - | 685 mm | 660 mm | 650 mm |
| à t_{120 min} | 410 mm | 680 mm | 630 mm | 600 mm |
| Vfunnel à t₀ | 3,6 s | 2,8 s | 2,6 s | 3,2 s |
| Vfunnel à t_{60 min} | - | - | 3,3 s (t₁₂₀) | 2,9 s |
| L-box | 0,9 | 0,89 | 0,9 | 0,89 |
| Stabilité au tamis | 17 % | 16 % | 6 % | 8 % |
| Résistance à la compression | | | | |
| 7 jours | 34,5 MPa | 22,3 MPa | 24,3 MPa | 30,5 MPa |
| 28 jours | 41,2 MPa | 33,5 MPa | 35,8 MPa | 36,7 MPa |

| | | | | |
|---|---|---|---|---|
| * L'agent "viscosant" est le NATROSOL 250 GXR (HEC) **L'agent "souillant" est l'ESACOL MX 144 (hydroxy propyl guar) | | | | |

## Revendications

1. Agent de rétention d'eau pour composition cimentaire, **caractérisé en ce qu'**il se présente sous la forme d'une suspension aqueuse liquide d'au moins un polysaccharide à une concentration massique comprise entre 15 et 30 % dans une solution aqueuse d'un sel de base forte, à l'exclusion de sels d'amonium, de force ionique comprise entre 1,25 mol/L et 15 mol/L, présentant un pH supérieur à 9 et renfermant une attapulgite sous forme micronisée et au moins une poudre minérale non phylliteuse, ci-après dénommée filler, inerte chimiquement dans ladite suspension aqueuse, de granulométrie comprise entre 0,1 et 100 micromètres, conférant à ladite suspension aqueuse une stabilité au moins dans une gamme de température allant de 5°C à 30°C.

2. Agent de rétention d'eau selon la revendication 1, **caractérisé en ce que** la teneur massique en attapulgite de la suspension aqueuse est comprise entre 0,1 % et 5 %, de préférence entre 0,2 % et 0,8 %.

3. Agent de rétention d'eau selon l'une des revendications 1 ou 2, **caractérisé en ce que** la solution aqueuse présente une force ionique comprise entre 2,5 mol/L et 12,5 mol/L.

4. Agent de rétention d'eau selon l'une quelconque des revendications précédentes, **caractérisé en ce que** le filler est un filler siliceux, de préférence cristallin, de masse volumique comprise entre 2,60 et 2,80 g/mL.

5. Agent de rétention d'eau selon quelconque des revendications précédentes, **caractérisé en ce que** le filler présente une courbe granulométrique dont la valeur D50 est comprise entre 1 et 12 micromètres, de préférence entre 2 et 8 micromètres.

6. Agent de rétention d'eau selon quelconque des revendications précédentes, **caractérisé en ce que** la teneur massique en filler est comprise entre 0,1 et 5 %, de préférence entre 0,35 et 1,5 % de ladite suspension aqueuse.

7. Agent de rétention d'eau selon quelconque des revendications précédentes, **caractérisé en ce que** la concentration massique en polysaccharide(s) est comprise entre 18 et 25 % de ladite suspension aqueuse.

8. Agent de rétention d'eau selon l'une quelconque des revendications précédentes, **caractérisé en ce que** le polysaccharide présente, à sec, une courbe granulométrique dont la valeur D50 est comprise entre 10 et 200 µm, de préférence entre 50 et 150 µm.

9. Agent de rétention d'eau selon quelconque des revendications précédentes, **caractérisé en ce que** le polysaccharide est une hydroxy alkyl cellulose, ou un hydroxy alkyl guar comportant un groupement alkyl en C₂ à C₈, ou un mélange de ceux-ci.

10. Agent de rétention d'eau selon la revendication 9, **caractérisé en ce que** l'hydroxy alkyl cellulose est choisie parmi une hydroxyl ethyl cellulose (HEC), une méthyl-hydroxy-propyl cellulose (MHPC), une hydroxyéthylcellulose modifiée hydrophobe (HM HEC), ou un mélange de celles-ci.

11. Utilisation de l'agent de rétention d'eau selon l'une quelconque des revendications précédentes, dans des compositions cimentaires pour augmenter à la fois leur viscosité et leur capacité à retenir l'eau en leur sein.

12. Utilisation de l'agent de rétention d'eau selon la revendication 10, dans des compositions cimentaires pour augmenter à la fois leur viscosité et leur capacité à retenir l'eau en leur sein sans affecter leur étalement.

13. Composition cimentaire à base de ciment et d'eau, **caractérisée en ce qu'**elle renferme un agent de rétention d'eau selon l'une quelconque des revendications 1 à 10 en une teneur comprise entre 0,1 et 5 % en poids du ciment.

## Patentansprüche

1. Wasserrückhaltemittel für zementöse Zusammensetzung, **dadurch gekennzeichnet, dass** es in Form einer flüssigen wässrigen Suspension mindestens eines Polysaccharids in einer Massenkonzentration zwischen 15 und 30 % inklusive in einer wässrigen Lösung eines starken Basensalzes mit Ausnahme von Ammoniumsalzen, mit einer Ionenstärke zwischen 1,25 mol/L und 15 mol/L inklusive, vorhanden ist mit einem pH über 9 und unter Einschluss eines Attapulgits in mikronisierter Form und mindestens eines nicht phyllitösen Mineralpulvers, nachfolgend als Filler bezeichnet, chemisch inert in der wässrigen Suspension, mit einer Korngröße zwischen 0,1 und 100 Mikrometer inklusive, die der wässrigen Suspension eine Stabilität mindestens in einem Temperaturbereich von 5 °C bis 30 °C verleiht.

2. Wasserrückhaltemittel nach Anspruch 1, **dadurch gekennzeichnet, dass** der Massengehalt an Attapulgit der wässrigen Suspension zwischen 0,1 % und 5 %, vorzugsweise zwischen 0,2 % und 0,8 %, inklusive ist.

3. Wasserrückhaltemittel nach einem der Ansprüche 1 oder 2, **dadurch gekennzeichnet, dass** die wässrigen Lösung eine Ionenstärke zwischen 2,5 mol/L und 12,5 mol/L aufweist.

4. Wasserrückhaltemittel nach einem der vorangehenden Ansprüche, **dadurch gekennzeichnet, dass** der Filler ein vorzugsweise kristalliner Kieselsäurefiller mit einer Dichte zwischen 2,60 und 2,80 g/mL inklusive ist.

5. Wasserrückhaltemittel nach einem der vorangehenden Ansprüche, **dadurch gekennzeichnet, dass** der Filler eine Korngrößenkurve aufweist, deren Wert D50 zwischen 1 und 12 Mikrometer, vorzugsweise zwischen 2 und 8 Mikrometer, inklusive ist.

6. Wasserrückhaltemittel nach einem der vorangehenden Ansprüche, **dadurch gekennzeichnet, dass** der Massengehalt an Filler zwischen 0,1 und 5 %, vorzugsweise zwischen 0,35 und 1,5 %, inklusive der wässrigen Suspension ist.

7. Wasserrückhaltemittel nach einem der vorangehenden Ansprüche, **dadurch gekennzeichnet, dass** die Massenkonzentration an Polysaccharid(en) zwischen 18 und 25 % der wässrigen Suspension ist.

8. Wasserrückhaltemittel nach einem der vorangehenden Ansprüche, **dadurch gekennzeichnet, dass** das Polysaccharid trocken eine Korngrößenkurve aufweist, deren Wert D50 zwischen 10 und 200 µm, vorzugsweise zwischen 50 und 150 µm, inklusive ist.

9. Wasserrückhaltemittel nach einem der vorangehenden Ansprüche, **dadurch gekennzeichnet, dass** das Polysaccharid eine Hydroxyalkylcellulose oder ein Hydroxyalkylgummi mit einer C₂-Cₛ-Alkylgruppe oder ein Gemisch derselben ist.

10. Wasserrückhaltemittel nach Anspruch 9, **dadurch gekennzeichnet, dass** die Hydroxyalkylcellulose aus eine Hydroxyethylcellulose (HEC), einer Methylhydroxypropylcellulose (MHPC), einer modifizierten hydrophoben Hydroxyethylcellulose (HM HEC) oder einem Gemisch derselben ausgewählt ist.

11. Verwendung des Wasserrückhaltemittels nach einem der vorangehenden Ansprüche in zementösen Zusammensetzungen, um sowohl ihre Viskosität und ihr Wasserrückhaltevermögen in sich zu erhöhen.

12. Verwendung des Wasserrückhaltemittels nach Anspruch 10 in zementösen Zusammensetzungen, um sowohl ihre Viskosität und ihr Wasserrückhaltevermögen in sich zu erhöhen, ohne ihre Fließfähigkeit zu beeinträchtigen.

13. Zementöse Zusammensetzung auf der Basis von Zement und Wasser, **dadurch gekennzeichnet, dass** sie ein Wasserrückhaltemittel nach einem der Ansprüche 1 bis 10 in einem Gehalt zwischen 0,1 und 5 Gew.-% des Zements einschließt.

## Claims

1. A water-retaining agent for a cement composition, **characterized in that** it appears as a liquid aqueous suspension of at least one polysaccharide at a mass concentration comprised between 15 to 30% in an aqueous strong base salt, excluding ammonium salts, with an ionic force comprised between 1.25 mol/L and 15 mol/L, having a pH greater than 9 and containing an attapulgite in micronized form and at least one non-phyllitous mineral powder, designated as filler hereafter, chemically inert in said aqueous suspension, with a grain size comprised between 0.1 and 100 micrometers, impairing stability to said aqueous suspension at least in a temperature range from 5°C to 30°C.

2. The water-retaining agent according to claim 1, **characterized in that** the attapulgite mass content of the aqueous suspension is comprised between 0.1% and 5%, preferably between 0.2% and 0.8%.

3. The water-retaining agent according to one of claims 1 or 2, **characterized in that** the aqueous solution has a ionic force comprised between 2.5 mol/L and 12.5 mol/L.

4. The water-retaining agent according to any of the preceding claims, **characterized in that** the filler is a siliceous preferably crystalline filler, with a density comprised between 2.60 and 2.80 g/mL.

5. The water-retaining agent according to any of the preceding claims, **characterized in that** the filler has a grain size curve, the D50 value of which is comprised between 1 and 12 micrometers, preferably between 2 and 8 micrometers.

6. The water-retaining agent according to any of the preceding claims, **characterized in that** the filler mass content is comprised between 0.1 and 5% preferably between 0.35 and 1.5% of said aqueous suspension.

7. The water-retaining agent according to any of the preceding claims, **characterized in that** the mass concentration of polysaccharide(s) is comprised between 18 and 25% of said aqueous suspension.

8. The water-retaining agent according to any of the preceding claims, **characterized in that** the polysaccharide under dry conditions has a grain size curve, the D50 value of which is comprised between 10 and 200 µm, preferably between 50 and 150 µm.

9. The water-retaining agent according to any of the preceding claims, **characterized in that** the polysaccharide is a hydroxy alkyl cellulose, or a hydroxy alkyl guar including a C₂-C₈ alkyl group, or a mixture thereof.

10. The water-retaining agent according to claim 9, **characterized in that** the hydroxy alkyl cellulose is selected from hydroxy ethyl cellulose (HEC), methyl-hydroxy-propyl cellulose (MHPC), a hydrophobic modified hydroxy ethyl cellulose (HMHEC), or a mixture thereof.

11. The use of the water-retaining agent according to any of the preceding claims, in cement compositions for increasing both their viscosity and their capability of retaining water in their midst.

12. The use of the water-retaining agent according to claim 10, in cement compositions for increasing both their viscosity and their capability of retaining water in their midst without affecting their spreading.

13. A cement composition based on cement and water, **characterized in that** it contains a water-retaining agent according to any of claims 1 to 10 in an amount comprised between 0.1 and 5% by weight of the cement.
